# EUROPÄISCHE PATENTSCHRIFT

(11) **EP 3 542 471 B1**
(45) Veröffentlichungstag und Bekanntmachung des Hinweises auf die Patenterteilung: **12.11.2025**
(21) Anmeldenummer: 17801704.2
(22) Anmeldetag: 21.11.2017
(51) Int. Cl.: H04B 10/116, B64D 11/00

(54) **ZWEI-WEGE-DATENKOMMUNIKATIONSSYSTEM FÜR FLUGZEUGKABINEN**
TWO-WAY DATA COMMUNICATION SYSTEM FOR AIRCRAFT CABINS
SYSTÈME DE COMMUNICATION BIDIRECTIONNELLE DE DONNÉES POUR CABINES D'AÉRONEF

(30) Priorität: 21.11.2016 DE 102016222933
(43) Veröffentlichungstag der Anmeldung: 25.09.2019
(73) Patentinhaber: Lufthansa Technik AG, 22335 Hamburg (DE)
(72) Erfinder: TAUBERT, Sven, 20459 Hamburg (DE); PETERMANN, Christopher, 20144 Hamburg (DE)
(74) Vertreter: Glawe, Delfs, Moll
(86) Internationale Anmeldenummer: PCT/EP2017/079845
(87) Internationale Veröffentlichungsnummer: WO 2018/091719

(56) Entgegenhaltungen:
- EP-A1- 2 487 109
- US-A1- 2004 077 308
- US-A1- 2012 275 795
- US-B1- 6 614 126

## Beschreibung

Die Erfindung betrifft ein Zwei-Wege-Datenkommunikationssystem für Flugzeugkabinen sowie ein Verfahren zu dessen Initialisierung.

In modernen Verkehrsflugzeugen, insbesondere Langstreckenflugzeugen, wird häufig sog. "Personal Television" als In-Flight-Entertainment angeboten. Bei diesem System verfügt jeder Sitzplatz über einen individuellen Monitor sowie dazugehörigen Kopfhöreranschluss, auf dem sich ein Fluggast nach seinen Wünschen zu beliebigen Zeitpunkten Audio- bzw. Video-On-Demand-Inhalte abrufen kann. Auch (Computer-)Spiele oder Live-Fernsehkanäle können zur Verfügung gestellt werden.

Zur individuellen Versorgung der einzelnen Monitore mit Inhalten ist ein leistungsstarkes Kommunikationsnetz zwischen den Monitoren und einem bordeigenen Server, der die Inhalte zur Verfügung stellt, erforderlich.

Im Stand der Technik ist es hierfür bekannt, die Monitore über Datenkabel mit dem Server zu verbinden. Hierzu werden Öffnungen als Kabeldurchführungen in dem Boden der Flugzeugkabine vorgesehen, durch die Kabel von den Monitoren ggf. über Netzwerkweichen zum Server geführt werden. Entsprechende Kabelverbindungen bieten grundsätzlich eine ausreichende Bandbreite für "Personal Television". Nachteilig an diesem Stand der Technik ist jedoch, dass bei einer Neukonfiguration der Flugzeugkabine, indem bspw. der Abstand zwischen Sitzreihen verändert wird, häufig neue Kabeldurchführungen und/oder eine vollständig neue Verkabelung erfordert. Die Flexibilität der Konfiguration der Flugzeugkabine ist also stark eingeschränkt.

Um die Flexibilität der Neukonfiguration der Flugzeugkabine zu verbessern, schlägt die DE 10 2008 024 217 A1 ein System zur kontaktlosen Daten- und Energieübertragung vor, bei dem über eine induktive Kopplung zwischen einer im Boden der Flugzeugkabine eingelassenen ersten Spule und einer an einem Flugzeugsitz angeordneten zweiten Spule sowohl Energie als auch Daten drahtlos übertragen werden können. Ist am Boden der Flugzeugkabine eine Vielzahl von Spulen vorgesehen, kann ein Flugzeugsitz variabel an denjenigen Positionen in der Flugzeugkabine angeordnet werden, an denen die Spule des Flugzeugsitzes mit einer ersten Spule am Kabinenboden ausreichend nah zum Koppeln ist. Nachteilig an diesem Stand der Technik ist die vergleichsweise geringe Bandbreite für die Datenübertragung, die für "Personal Television" regelmäßig nicht ausreichend ist. Außerdem entsteht bei der induktiven Datenübertragung regelmäßig eine elektromagnetische Störausstrahlung.

Beispielsweise aus der EP 2 393 225 A1 ist weiterhin bekannt, für die Datenübertragung vom bordeigenen Server zu den einzelnen Monitoren die Kabinenbeleuchtung für das menschliche Auge nicht sichtbar so zu modulieren, dass Daten von der Kabinenbeleuchtung in der Decke der Flugzeugkabine an geeignete, mit den Monitoren verbundene Sensoren übertragen werden können. Die Signalrückführung vom Monitor zum bordeigenen Server erfolgt dabei jedoch weiterhin drahtgebunden, sodass bei dieser Technologie die bereits benannten Nachteile von Kabelverbindungen fortbestehen.

Das Dokument US 2012/0275795 A1 offenbart u. a. ein dazu vergleichbares optisches Freiraum-Kommunikationssystem für Flugzeugkabinen, bei dem entlang der Kabinendecke fest installierte Sende- und Empfangseinheiten optisch mit in die einzelnen Sitze integrierte und den zuvor genannten, fest installierten Einheiten gegenüberliegende Sende- und Empfangseinheiten kommunizieren, um so bspw. die in den Sitzen installierten Inflight-Entertainment-Systeme mit Daten zu versorgen. Dabei ist vorgesehen, dass die in den Sitzen integrierte Sende- und Empfangseinheiten jeweils mit mehreren entlang der Kabinendecke installierten Sende- und Empfangseinheiten in grundsätzlicher Kommunikationsverbindung zueinanderstehen, sodass eine Kommunikation häufig auch dann noch möglich ist, wenn sich Sichtverbindung zwischen zwei Sende- und Empfangseinheiten zeitweise gestört sein sollte. Es ist aber dennoch nicht ausgeschlossen, dass die Kommunikationsverbindung zu einer an einem Sitz integrierten Sende- und Empfangseinheit durch entsprechende Abschattung vollständig unterbrochen wird.

Der Erfindung liegt die Aufgabe zugrunde, Zwei-Wege-Datenkommunikationssystem für Flugzeugkabinen zu schaffen, bei dem die Nachteile aus dem Stand der Technik nicht mehr oder nur noch im verminderten Umfang auftreten.

Gelöst wird diese Aufgabe durch eine Datenkommunikationssystem gemäß dem Hauptanspruch. Vorteilhafte Weiterbildungen sind Gegenstand der abhängigen Ansprüche.

Demnach betrifft die Erfindung ein Zwei-Wege-Datenkommunikationssystem für Flugzeugkabinen umfassend wenigstens ein in der Flugzeugkabine angeordnetes Kabinenmodul mit wenigstens einer Sende- und Empfangseinheit sowie ein in der Flugzeugkabine verankerten Möbel befestigtes Möbelmodul mit einer Sende- und Empfangseinheit, wobei die Sende- und Empfangseinheiten jeweils eine steuerbare Lichtquelle und einen Lichtsensor umfassen und das Möbelmodul derart gegenüber dem Kabinenmodul angeordnet ist, dass von der Lichtquelle einer der Sende- und Empfangseinheit des wenigstens einen Kabinenmoduls ausgehendes Licht von dem Lichtsensor der Sende- und Empfangseinheit des Möbelmoduls und von der Lichtquelle der Sende- und Empfangseinheit des Möbelmoduls ausgehendes Licht von dem Lichtsensor derselben Sende- und Empfangseinheit des wenigstens einen Kabinenmoduls detektiert wird, wobei am Möbelmodul eine Dichtungsanordnung zur Bildung eines geschlossenen Raums um die miteinander kommunizierenden Sende- und Empfangseinheiten am Möbel- und Kabinenmodul vorgesehen ist.

Die Erfindung betrifft weiterhin ein Verfahren zur Initialisierung eines erfindungsgemäßen Zwei-Wege-Datenkommunikationssystem, mit den Schritten:
- Senden einer Initialisierungsanfrage durch sämtliche Sende- und Empfangseinheiten aller Kabinenmodule;
- Senden einer Initialisierungsantwort durch die Sende- und Empfangseinheiten derjenigen Möbelmodule, die eine Initialisierungsanfrage erhalten haben; und
- Erstellen oder Überprüfen der Möbelkonfiguration in der Flugzeugkabine anhand der Erfassung derjenigen Kabinenmodule, die eine Initialisierungsantwort von einem Möbelmodul erhalten.

Das erfindungsgemäße Datenkommunikationssystem beruht auf der sog. (Visual) Light Communication, bei der zumindest in einem Teil einer Datenübertragungstrecke die Daten per (sichtbarem) Licht übertragen werden. Für die Lichtübertragungsstrecke ist dabei lediglich eine Sichtverbindung zwischen Sender und Empfänger erforderlich. Eine strukturelle Verbindung, wie bspw. Kabel für die Datenübertragung durch Stromimpulse, ist nicht erforderlich. In der Folge lassen sich bei der erfindungsgemäßen Lösung Möbel an belieben Stellen einer Flugzeugkabine montieren, an denen eine Datenübertragung zwischen dem zugeordneten Möbelmodul und einem Kabinenmodul möglich ist. Insbesondere wenn mehr Kabinenmodule als Möbel mit einem Möbelmodul in einer Flugzeugkabine vorgesehen sind, ist bereits Flexibilität in der Anordnung der Möbel gegeben. Eine Neuverlegung von Kabeln ist dabei nicht erforderlich.

Das Datenkommunikationssystem bietet darüber hinaus eine hohe Übertragungsrate und gleichzeitig eine äußerst vorteilhafte elektromagnetische Verträglichkeit. Anders als bei einer Datenübertragung per induktiver Kopplung wird kein störendes und insbesondere schwankendes elektromagnetisches Feld erzeugt, welches andere elektronischen Geräte und Einrichtungen stören könnte.

Durch die unmittelbare Verbindung zwischen einem Möbelmodul und einem Kabinenmodul, die jeweils eine Sende- und Empfangseinheit umfassen, ist außerdem eine Zwei-Wege-Kommunikation möglich. Insbesondere kann auf einen kabelgebundenen Rückführungskanal verzichtet werden.

Bei der Anordnung des Möbelmoduls gegenüber dem Kabinenmodul kann der Abstand zwischen Möbel- und Kabinenmodul bspw. weniger als 1 Zoll (2,54 cm), vorzugsweise 0,1 cm bis 1 cm betragen.

Die Sende- und Empfangseinheiten sowohl des Möbelmoduls als auch des Kabinenmoduls können zueinander baugleich ausgeführt sein. Zur Umwandlung empfangener Lichtimpulse in elektrische Signale oder zur Erzeugung von Lichtimpulsen auf Basis elektrischer Signal können Möbel- und Kabinenmodul eine dafür ausgestaltete Steuerungseinheit aufweisen. Es ist möglich, dass von einer Steuerungseinheit mehrere Sende- und Empfangseinheiten gesteuert werden. Die Steuerungseinheit kann zur Modulation der zu übertragenen Daten ausgebildet sein. Dabei kann auf beliebige digitale Modulationsverfahren, wie binäre Phasenumtastung (BPSK), Quadraturphasenumtastung (QPSK) oder Quadraturamplitudenmodulation (QAM), zurückgegriffen werden.

Die optische Datenübertragung kann im Infrarotbereich (Wellenlängen von ca. 780 nm bis 1 mm), im sichtbaren Bereich (Wellenlängen von ca. 380 nm bis 780 nm) oder im Ultravioletten Bereich (Wellenlänge von ca. 1 nm bis 380 nm) erfolgen.

Bei dem Möbel handelt es sich in der Regel um einen Flugzeugsitz. Im Folgenden werden daher die Begriffe "Möbel" und "Flugzeugsitz" bzw. "Sitz" praktisch synonym verwendet, auch wenn die Erfindung nicht unmittelbar auf Flugzeugsitze beschränkt ist.

Möbel für Flugzeugkabinen bzw. Flugzeugsitze werden regelmäßig und auch im Rahmen dieser Erfindung bevorzugt in am Boden der Flugzeugkabine entlanglaufenden Befestigungsschienen bzw. Sitzschienen verankert. Insbesondere für Flugzeugsitze vorgesehene Befestigungsschienen verlaufen dabei häufig in Längsrichtung des Flugzeuges durch die gesamte Flugzeugkabine. Um die Anordnung der einzelnen Sitze bzw. Sitzreihen flexibel zu gestalten, weisen die Befestigungsschienen häufig eine Rasterung auf, die eine nahezu beliebige Position einzelner Sitze bzw. Sitzreihen entlang der Befestigungsschiene gestattet. Hierüber lässt sich insbesondere auch der Abstand zwischen zwei Sitzreihen festlegen. Das Maß für die Rasterung - also der Abstand zwischen zwei Rastpositionen - beträgt in der Regel 1 Zoll (2,54 cm).

Es ist bevorzugt, wenn wenigstens eines der Kabinenmodule langgestreckt ausgeführt ist und mehrere der Länge nach, vorzugsweise im gleichbleibenden Abstand, angeordnete Sende- und Empfangseinheiten umfasst. Dadurch ist es möglich, dass ein Möbel mit dem Möbelmodul in wenigstens zwei unterschiedlichen Positionen gegenüber dem Kabinenmodul angeordnet werden kann, wobei die Sende- und Empfangseinheit des Möbelmoduls dann mit einer der Sende- und Empfangseinheiten am Kabinenmodul kommunizieren kann. Es ist außerdem möglich, dass zwei oder mehr Möbel mit jeweils einem Möbelmodul an ein Kabinenmodul angebunden sind, indem die Sende- und Empfangseinheit des Möbelmoduls jeweils eines Möbels mit je einer Sende- und Empfangseinheit des Kabinenmoduls kommuniziert.

Die Längsachse des Kabinenmoduls ist weiter vorzugsweise parallel zu einer am Boden der Flugzeugkabine angeordneten Befestigungsschiene ausgerichtet, wobei der Abstand zwischen den Sende- und Empfangseinheiten des Kabinenmoduls der Rasterung der Befestigungsschiene entsprechen kann. Ist die Bodenschiene entsprechend ausgestaltet, können Möbel und insbesondere Flugzeugsitze in beliebiger Position entlang der Befestigungsschiene im Bereich des Kabinenmoduls positioniert bzw. verschoben werden. Es ist dann sichergestellt, dass sich an dieser Position eine zur Kommunikation mit der Sende- und Empfangseinheit des Möbelmoduls geeignete Sende- und Empfangseinheit des Kabinenmoduls befindet.

Es ist bevorzugt, wenn wenigstens zwei Kabinenmodule vorgesehen sind, wobei die Kabinenmodule vorzugsweise parallel zu einer am Boden der Flugzeugkabine angeordneten Befestigungsschiene angeordnet sind. Insbesondere können die Kabinenmodule dabei unmittelbar hintereinander angeordnet sein. Durch eine entsprechende Anordnung mehrerer Kabinenmodule ist es möglich, über die gesamte Länge einer Befestigungsschiene, bspw. durch die gesamte Flugzeugkabine, bodenseitige Sende- und Empfangsmodule bereitzustellen, sodass Möbel oder Flugzeugsitze in einer beliebigen Position an den Befestigungsschiene verankert werden können, wobei dann eine Zwei-Wege-Datenkommunikation über die jeweils zugeordneten Möbelmodule sichergestellt ist. Gleichzeitig kann die Länge der einzelnen Kabinenmodule derart begrenzt sein, dass bspw. ein Austausch einzelner defekter Kabinenmodule problemlos möglich ist.

Das Kabinenmodul kann an eine Kopplungsvorrichtung zum Datenaustausch mit einem weiteren Kabinenmodul aufweisen. Eine Kopplungsvorrichtung ist dabei vorzugsweise an einer Stirnseite des Kabinenmoduls angeordnet. Durch eine entsprechende Kopplungsvorrichtung kann auf einfache Weise eine Reihenschaltung von wenigstens zwei Kabinenmodulen, die mit ihren Stirnseiten aneinandergrenzen, realisiert werden. Über die Kopplungsvorrichtung kann vorzugsweise auch elektrische Energie übertragen werden. Dadurch wird erreicht, dass lediglich ein erstes Kabinenmodul einer Reihenschaltung an ein bordeigenen Datennetz bzw. Server und/oder eine Energieversorgung angeschlossen werden muss; die übrigen Kabinenmodule der Reihenschaltung können dann über dieses erste Kabinenmodul mit Daten und/oder Energie versorgt werden. Die Kopplungsvorrichtung kann auch eine Sende- und Empfangseinheit mit einer steuerbaren Lichtquelle und einen Lichtsensor analog zu den für die Kommunikation zwischen Kabinenmodul und Möbelmodul vorgesehenen Sende- und Empfangseinheiten umfassen.

Es ist bevorzugt, wenn das Möbelmodul und/oder wenigstens ein Kabinenmodul eine standardisierte Datenübertragungsschnittstelle zur Verbindung mit weiteren Geräten aufweist, wobei die Datenübertragungsschnittstelle vorzugsweise auch zur Stromversorgung ausgebildet ist, bspw. nach dem Power-over-Ethernet-Prinzip. Über entsprechende standardisierte Datenübertragungsschnittstellen, wie bspw. RJ-45-Stecker bzw. Buchsen, ist es möglich, ein Möbelmodul oder ein Kabinenmodul mit einem Monitor, einem Datenübertragungsnetz und/oder einem Server, die regelmäßig über standardisierte Datenübertragungsschnittstellen verfügen, zu verbinden. Insbesondere kann eine an Bord eines Flugzeugs bereits bestehende bspw. kabelbasierte Infrastruktur für das In-Flight-Entertainmentsystem einfach und kostengünstig auf eine erfindungsgemäße Zwei-Wege-Datenkommunikation umgerüstet werden. Auch können bereits bestehende Möbel bzw. Flugzeugsitze einfach zu erfindungsgemäßen Möbeln umgerüstet werden.

Neben der optischen Datenübertragung können Möbelmodul und Kabinenmodul Mittel zur drahtlosen, vorzugsweise induktiven Energieübertragung vom Kabinenmodul zum Möbelmodul aufweisen. Dadurch können das Möbelmodul sowie ggf. daran angeschlossene Geräte, wie bspw. Monitore, über das Kabinenmodul drahtlos mit Energie versorgt werden. Im Ergebnis ist bei einer solchen Ausführungsform keinerlei Kabelverbindung zwischen Möbel und Flugzeug erforderlich. Da die drahtlose, insbesondere induktive Energieversorgung anders als im Stand der Technik nicht für eine Datenübertragung moduliert werden muss, lässt sich eine günstigere elektromagnetische Verträglichkeit erreichen. Dies gilt besonders für den Fall einer induktiven Energieübertragung, bei der die Frequenz der induktiven Kopplung möglichst wenig Störungen verursachend gewählt werden kann.

Erfindungsgemäß ist am Möbelmodul eine Dichtungsanordnung, vorzugsweise eine umlaufende Gummilippe, zur Bildung eines geschlossenen Raums um die miteinander kommunizierenden Sende- und Empfangseinheiten am Möbel- und Kabinenmodul vorgesehen. Durch eine entsprechende Dichtungsanordnung kann sichergestellt werden, dass nach Montage des Möbels mit dem Möbelmodul keine Fremdkörper oder Flüssigkeiten in die Sichtlinie zwischen den beiden Sende- und Empfangseinheiten gelangen können, welche die Kommunikation stören könnten. Auch wird der Eintritt von Licht von externen Lichtquellen, welche die Kommunikation stören könnten, verhindert.

Vorzugsweise ist wenigstens ein Abdeckelement zum Abdecken wenigstens einer nicht zur Kommunikation mit einem Möbelmodul genutzter Sende- und Empfangseinheiten am Kabinenmodul vorgesehen. Mit einem entsprechenden Abdeckelement können ungenutzte Sende- und Empfangseinheiten vor Beschädigungen geschützt werden. Insbesondere wenn das Kabinenmodul am Boden der Flugzeugkabine angeordnet ist, kann das Abdeckelement eine an den sonstigen Bodenbelag in der Flugzeugkabine angepasste Oberfläche aufweisen. Die Oberfläche kann durch farbliche Gestaltung, bspw. durch Bedrucken, an den sonstigen Bodenbelag angepasst sein. Insbesondere kann das Abdeckelement aber mit dem sonstigen Bodenbelag selbst, bspw. Teppich, derart versehen sein, dass sich der an dem Abdeckelement angeordnete Bodenbelag in den sonstigen Bodenbelag einfügt. Für die Lichtquellen und Lichtsensoren der Sende- und Empfangseinheiten können Aussparungen im Bodenbelag vorgesehen sein. Alternativ oder zusätzlich ist es auch möglich, dass das Abdeckelement zumindest in den für die Kommunikation von den Sende- und Empfangseinheiten genutzten Wellenlängenbereichen ausreichend transparent ist, dass die Kommunikation durch das Abdeckelement hindurch erfolgen kann. Dabei ist es grundsätzlich ausreichend, wenn das Abdeckelement nur im Bereich der Lichtquellen und Lichtsensoren der Sende- und Empfangseinheiten transparent ist. Es ist aber auch möglich, dass Abdeckelement vollständig entsprechend transparent auszugestalten. In beiden Fällen kann sich das Abdeckelement über ein gesamtes Kabinenmodul erstrecken. Unabhängig davon kann das Abdeckelement einstückig mit einer Abdeckung für die Befestigungsschiene ausgebildet sein.

Es ist bevorzugt, wenn wenigstens eine Lichtquelle eine LED oder eine OLED ist und/oder wenigstens ein Lichtsensor eine Fotodiode ist. Entsprechende Lichtquellen und Sensoren gelten als zuverlässig und weisen darüber hinaus auch noch ein geringes Gewicht auf. Es ist weiterhin bevorzugt, wenn die Lichtquelle und/oder der Lichtsensor vorzugsweise einen Lichtleiter umfasst, mit dem der Ort der Lichterzeugung von dem Ort des Lichtaustritts und/oder der Ort der Lichterfassung von dem Ort des Lichteintritts räumlich voneinander trennbar ist. Ein entsprechender Lichtleiter kann bspw. eine Glasfaser oder ein Glasfaserbündel sein. Durch entsprechende Lichtleiter lassen sich bspw. die Lichtquellen und Lichtsensoren mehrerer Sende- und Empfangseinheiten eines Kabinenmoduls sowie ggf. dessen Kopplungsvorrichtung in der unmittelbaren Nähe zu einer Steuerungselektronik - bspw. in Form von Arrays - zusammenfassen, wobei durch die Lichtleiter weiter sichergestellt werden kann, dass das Licht weiterhin an den dafür vorgesehenen Stellen entlang des Kabinenmoduls ausgesendet und detektiert wird.

Das Kabinenmodul kann sowohl an einer Seitenwand oder am Boden der Flugzeugkabine angeordnet sein. Es ist auch möglich, dass das Kabinenmodul in einer Seitenwand oder im Boden der Flugzeugkabine integriert ist. Das Kabinenmodul kann dazu an der Seitenwand oder am Boden festgeklebt werden. Auch kann das Kabinenmodul in einer Aussparung oder Nut im Boden oder in der Seitenwand der Flugzeugkabine befestigt sein.

Es ist auch möglich, dass eine Sende- und Empfangseinheit mehrere Lichtquellen und/oder Lichtsensoren umfasst oder mehrere Sende- und Empfangseinheiten unmittelbar nebeneinander angeordnet sind, um zwischen einem Möbelmodul und dem Kabinenmodule mehrere parallele Datenübertragungsstrecken zur Erhöhung der Bandbreite vorgesehen sind. Um eine gegenseitige Störung zu verhindern, kann vorgesehen sein, die Lichtquellen und/oder Lichtsensoren der Sende- und Empfangseinheiten von Möbel- und Kabinenmodul derart paarweise mit Filtern zu versehen, so dass auf eine optische Trennung der Lichtquellen und Lichtsensoren von parallelen Datenübertragungsstrecken verzichtet werden kann.

Bei dem erfindungsgemäßen Verfahren zur Initialisierung eines erfindungsgemäßen Zwei-Wege-Datenkommunikationssystems werden zunächst sämtliche Sende- und Empfangseinheiten der Kabinenmodule aktiviert und senden eine Initialisierungsanfrage aus. Insbesondere werden die Initialisierungsanfrage also ohne nähere Kenntnis, welcher Sende- und Empfangseinheit der Kabinenmodule tatsächlich die Sende- und Empfangseinheit eines Möbelmoduls zugeordnet ist, durch sämtliche Sende- und Empfangseinheit der Kabinenmodule ausgesendet. Erst in einem zweiten Schritt, indem die Sende- und Empfangseinheiten der Möbelmodule eine durch die Initialisierungsanfrage provozierte Initialisierungsantwort zurücksenden, die von den jeweils zugeordneten Sende- und Empfangseinheiten der Kabinenmodule empfangen werden, wird festgestellt, welcher Sende- und Empfangseinheit der Kabinenmodule tatsächlich eine Sende- und Empfangseinheit eines Möbelmoduls zugeordnet ist.

Da die Position der Sende- und Empfangseinheit der Kabinenmodule grundsätzlich bekannt ist, wird anhand der Ermittlung derjenigen Kabinenmodule, die eine Initialisierungsantwort von einem Möbelmodul erhalten, eine Möbel- bzw. Sitzkonfiguration bzw. einer Flugzeugkabine ermittelt oder überprüft werden. Ist zunächst keine Möbel- bzw. Sitzkonfiguration bekannt, ergibt sich auch der Position der fraglichen Sende- und Empfangseinheit der Kabinenmodule eine erste Information, wo in der Kabine Möbel bzw. Sitze umfassend ein Möbelmodul angeordnet sind. Ist eine Möbel- bzw. Sitzkonfiguration bekannt (bspw. durch eine Ermittlung, wie soeben beschrieben) können anhand der Position der fraglichen Sende- und Empfangseinheit der Kabinenmodule evtl. Fehlfunktionen bei der Datenübertragung ermittelt werden.

Diejenigen Sende- und Empfangseinheit der Kabinenmodule, bei denen keine Initialisierungsantwort eingeht, werden vorzugsweise abgeschaltet, u.a. um Energie zu sparen.

Es ist möglich, dass die Initialisierung des erfindungsgemäßen Zwei-Wege-Datenkommunikationssystems einen Bandbreitentest umfasst. Dazu wird über die einzelnen Sende- und Empfangseinheiten eine gewisse Datenmenge übertragen und überprüft, welche Zeit für eine fehlerfreie Übertragung erforderlich ist. Auch hierdurch können evtl. Fehlfunktionen aufgedeckt werden.

Die Erfindung wird nun anhand einer vorteilhaften Ausführungsform unter Bezugnahme auf die beigefügten Zeichnungen beispielhaft beschrieben. Es zeigen:
- Figur 1:: eine schematische Darstellung eines bevorzugten Ausführungsbeispiels eines erfindungsgemäßen Zwei-Wege-Datenkommunikationssystems; und
- Figur 2:: eine schematische Schnittansicht der Figur 1.

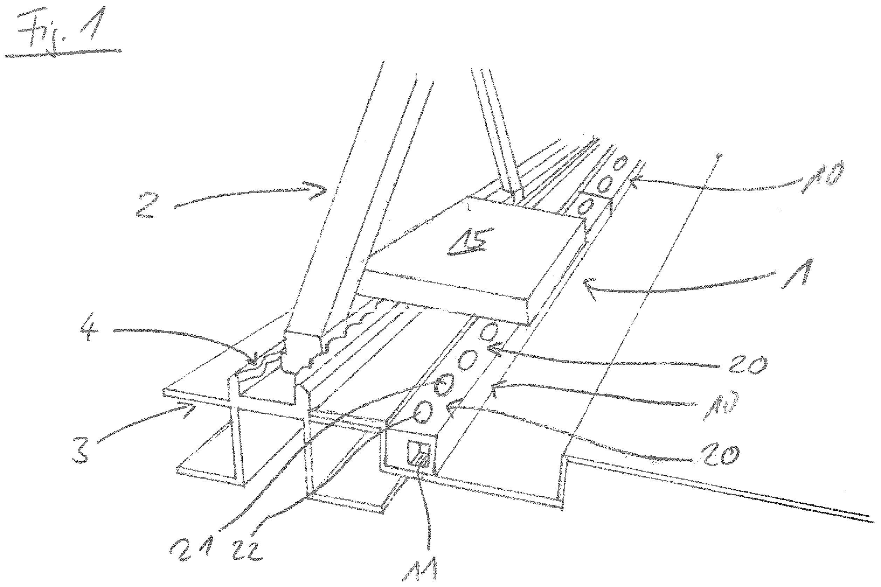

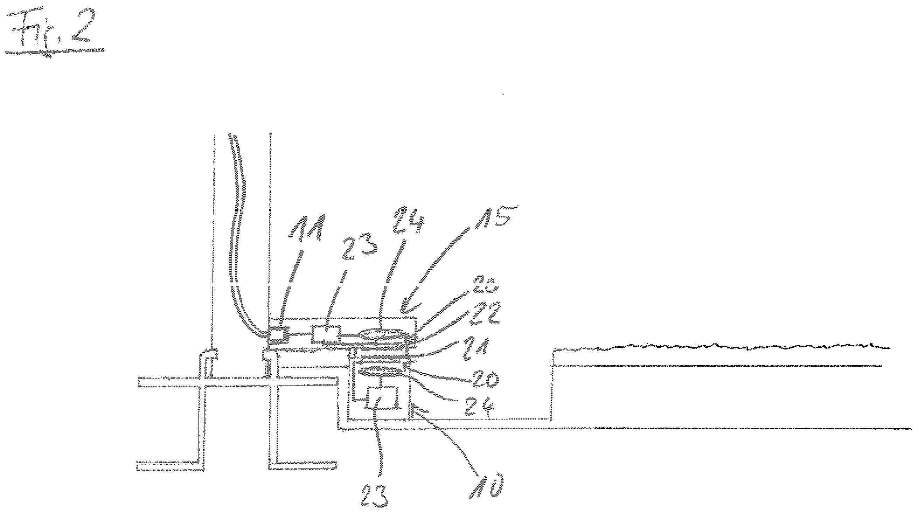

Figur 1 zeigt eine schematische Darstellung eines erfindungsgemäßen Zwei-Wege-Datenkommunikationssystems 1, während in Figur 2 eine dazugehörige schematische Schnittansicht dargestellt ist.

Das dargestellte Zwei-Wege-Datenkommunikationssystem 1 ist für die Kommunikation zwischen einem In-Flight-Entertainment-Server (nicht dargestellt) und In-Flight-Entertainment-Monitoren mit berührungsempfindlichem Bildschirm (nicht dargestellt), die jeweils in einen Flugzeugsitz 2 integriert sind, ausgebildet. Der in Figur 1 angedeutete Flugzeugsitz 2 ist in einer am Boden der Flugzeugkabine verlaufenden Befestigungsschiene 3 verankert. Die Befestigungsschiene 3 weist dabei eine Rasterung 4 auf, sodass der Flugzeugsitz 2 grundsätzlich in einer beliebigen Position entlang der Befestigungsschiene 3 an dieser befestigt werden kann.

Parallel zur Befestigungsschiene 3 sind mehrere langgestreckte Kabinenmodule 10, 10' angeordnet, die jeweils baugleich zueinander ausgeführt sind. Ein Kabinenmodul 10, 10' weist dabei eine Mehrzahl von Sende- und Empfangseinheiten 20 umfassend jeweils eine LED als Lichtquelle 21 und eine Fotodiode als Lichtsensor 22 auf.

Eine RJ-45-Buchse an dem einen Kabinenmodul 10 dient als Datenübertragungsschnittstelle 11 zur Anbindung an ein bordeigenes Ethernet und somit indirekt an den In-Flight-Entertainment-Server. Außerdem wird das erste Kabinenmodul 10 über diese Datenübertragungsschnittstelle 11 mit der zum Betrieb erforderlichen elektrischen Leistung versorgt. An der anderen, nicht dargestellten Seite des ersten Kabinenmoduls 10 ist ein RJ-45-Stecker vorgesehen, der mit einer entsprechenden Buchse an dem zweiten Kabinenmodul 10' verbunden ist. Auf diese Weise werden die Kabinenmodule 10, 10' in Reihe geschaltet, wobei lediglich das erste Kabinenmodul 10 mit dem bordeigenen Netz verbunden werden muss; das zweite und alle weiteren Kabinenmodule 10' werden dann über das erste Kabinenmodul 10 mit Daten und Energie versorgt. Die RJ-45-Buchse bzw. der RJ-45-Stecker zur Verbindung zweier Kabinenmodule 10, 10' stellen damit eine Kopplungsvorrichtung zum Datenaustausch, aber auch zur Stromübertragung zwischen den Kabinenmodulen 10, 10' dar.

Am Möbel bzw. Flugzeugsitz 2 ist ein Möbelmodul 15 befestigt. Das Möbelmodul 15 weist ebenfalls eine Sende- und Empfangseinheit 20 auf, die jedoch auf der dem Kabinenmodul 10 zugewandten Seite angeordnet ist, weshalb sie in Figur 1 nicht zu sehen sind. Die Sende- und Empfangseinheit 20 des Möbelmoduls 15 ist dabei gleich zu den Sende- und Empfangseinheiten 20 der Kabinenmodule 10, 10 ausgebildet.

Grundsätzlich ist die Sende- und Empfangseinheit 20 des Möbelmoduls 15 derart am Flugzeugsitz 2 befestigt, dass unabhängig von der Verankerungsposition des Flugzeugsitzes 2 in der Befestigungsschiene 3 die Lichtquellen 21 und Lichtsensoren 22 der Sende- und Empfangseinheit 20 des Möbelmoduls 15 sowie einer Sende- und Empfangseinheit 20 des Kabinenmoduls 10 unmittelbar gegenüberliegend angeordnet sind. So wird sichergestellt, dass von der Lichtquelle 21 einer der Sende- und Empfangseinheit 20 eines Kabinenmoduls 10, 10' ausgehendes Licht von dem Lichtsensor 22 der Sende- und Empfangseinheit 20 des Möbelmoduls 15 und von der Lichtquelle 21 der Sende- und Empfangseinheit 20 des Möbelmoduls 15 ausgehendes Licht von dem Lichtsensor 22 derselben Sende- und Empfangseinheit 20 des Kabinenmoduls 10, 10' detektiert werden kann. Dadurch wird eine Zwei-Wege-Kommunikation, bspw. zwischen einem am Flugzeugsitz 2 angeordneten Monitor und dem In-Flight-Entertainmentserver, ermöglicht.

In Figur 2 ist eine schematische Schnittansicht durch das Zwei-Wege-Datenkommunikationssystems 1 gemäß Figur 1 gezeigt. Insbesondere ist in Figur 2 die unmittelbar gegenüberliegende Anordnung der Lichtquelle 21 einer Sende- und Empfangseinheit 20 des Kabinenmoduls 10 und des Lichtsensors 22 der Sende- und Empfangseinheit 20 des Möbelmoduls 15 ersichtlich. Eine entsprechende Anordnung liegt auch für die Lichtquelle 21 der Sende- und Empfangseinheit 20 des Möbelmoduls 15 und des Lichtsensors 22 der Sende- und Empfangseinheit 20 des Kabinenmoduls 10 vor.

Die Sende- und Empfangseinheiten 20 sowohl im Kabinenmodul 10 als auch im Möbelmodul 15 sind jeweils mit einer Steuerungseinheit 23 verbunden, welche die jeweiligen Lichtquellen 21 entsprechend empfangener elektrischer Signale ansteuert und über die Lichtsensoren 22 empfangene Lichtimpulse in elektrische Signale umwandelt.

Darüber hinaus sind die Steuerungseinheiten 23 jeweils mit Spulen 24 zur induktiven Energieübertragung verbunden. Die Steuerungseinheit 23 des Kabinenmoduls 10 erzeugt dabei in der zugehörigen Spule 24 ein elektrisches Wechselfeld, welches zu einer Gegeninduktion in der Spule 24 des Möbelmoduls 15 führt, welche von der Steuerungseinheit 23 als elektrische Energie genutzt, aber auch weitergegeben werden kann.

Am Möbelmodul 15 ist eine Datenübertragungsschnittstelle 11 vorgesehen, mit der der Monitor (nicht dargestellt) verbunden ist. Darüber hinaus wird der Monitor über diese Datenübertragungsschnittstelle 11 mit Strom versorgt, nämlich mit über die Spule 24 des Möbelmoduls 15 empfangenen Strom. Auf eine Kabelverbindung zur Stromversorgung zwischen Flugzeugsitz 2 und dem Kabinenboden kann somit vollständig verzichtet werden.

Das Möbelmodul 15 weist an seiner Unterseite weiterhin eine als umlaufende Gummilippe ausgestaltete Dichtungsanordnung 16 aus, mit der der Bereich zwischen den miteinander kommunizierenden Sende- und Empfangseinheiten 20 des Möbel- 15 und des Kabinenmoduls 10 von der Umgebung abgeschirmt wird. Durch die Dichtungsanordnung 16 gelangt weder störendes Umgebungslicht auf die Lichtsensoren 22 der Sende- und Empfangseinheiten 20 noch besteht die Gefahr, dass Fremdkörper die Kommunikation stören könnten.

Für die in einer bestimmten Kabinenkonfiguration nicht genutzten Sende- und Empfangseinheiten 20 der Kabinenmodule 10, 10' (vgl. Figur 1) können Abdeckelemente (nicht dargestellt) vorgesehen sein, mit denen die Sende- und Empfangseinheiten 20 vor Beschädigungen geschützt werden und die eine an den übrigen Bodenbelag der Flugzeugkabine, bspw. Teppich, angepasste Oberseite aufweisen können.

## Patentansprüche

1. Zwei-Wege-Datenkommunikationssystem (1) für Flugzeugkabinen umfassend wenigstens ein in der Flugzeugkabine angeordnetes Kabinenmodul (10, 10') mit wenigstens einer Sende- und Empfangseinheit (20) sowie ein in der Flugzeugkabine verankerte Möbel (2) befestigtes Möbelmodul (15) mit einer Sende- und Empfangseinheit (20), wobei die Sende- und Empfangseinheiten (20) jeweils eine steuerbare Lichtquelle (21) und einen Lichtsensor (22) umfassen und das Möbelmodul derart unmittelbar gegenüber dem Kabinenmodul (10, 10') angeordnet ist, dass von der Lichtquelle (21) einer der Sende- und Empfangseinheit (20) des wenigstens einen Kabinenmoduls (10, 10') ausgehendes Licht von dem Lichtsensor (22) der Sende- und Empfangseinheit (20) des Möbelmoduls (15) und von der Lichtquelle (21) der Sende- und Empfangseinheit (20) des Möbelmoduls (15) ausgehendes Licht von dem Lichtsensor (22) derselben Sende- und Empfangseinheit (20) des wenigstens einen Kabinenmoduls (10, 10') detektiert wird, **dadurch gekennzeichnet, dass** am Möbelmodul (15) eine Dichtungsanordnung (16) zur Bildung eines geschlossenen Raums um die miteinander kommunizierenden Sende- und Empfangseinheiten (20) am Möbel- und Kabinenmodul (10, 15) vorgesehen ist.

2. Zwei-Wege-Datenkommunikationssystem nach Anspruch 1,
**dadurch gekennzeichnet, dass**
das Kabinenmodul (10, 10') langgestreckt ausgeführt ist und mehrere der Länge nach, vorzugsweise im gleichbleibenden Abstand, angeordnete Sende- und Empfangseinheiten (20) umfasst, wobei die Längsachse des Kabinenmoduls (10, 10') vorzugsweise parallel zu einer am Boden der Flugzeugkabine angeordneten Befestigungsschiene (3) ausgerichtet sind und/oder der Abstand zwischen den Sende- und Empfangseinheiten (20) des Kabinenmoduls (10, 10') der Rasterung der Befestigungsschiene (3) entspricht.

3. Zwei-Wege-Datenkommunikationssystem nach einem der vorhergehenden Ansprüche,
**dadurch gekennzeichnet, dass**
wenigstens zwei Kabinenmodule (10, 10') vorgesehen sind, wobei die Kabinenmodule (10, 10') vorzugsweise parallel zu einer am Boden der Flugzeugkabine angeordneten Befestigungsschiene (3) angeordnet sind.

4. Zwei-Wege-Datenkommunikationssystem nach einem der vorhergehenden Ansprüche,
**dadurch gekennzeichnet, dass**
das Kabinenmodul (10) wenigstens eine Kopplungsvorrichtung zum Datenaustausch mit einem weiteren Kabinenmodul (10') aufweist, wobei eine Kopplungsvorrichtung vorzugsweise an einer Stirnseite des Kabinenmoduls (10, 10') angeordnet ist.

5. Zwei-Wege-Datenkommunikationssystem nach Anspruch 4,
**dadurch gekennzeichnet, dass**
die Kopplungsvorrichtung eine Sende- und Empfangseinheit (20) mit einer steuerbare Lichtquelle (21) und einen Lichtsensor (22) umfasst.

6. Zwei-Wege-Datenkommunikationssystem nach einem der vorhergehenden Ansprüche,
**dadurch gekennzeichnet, dass**
das Möbelmodul (15) und/oder wenigstens ein Kabinenmodul (10, 10') eine standardisierte Datenübertragungsschnittstelle (11) zur Verbindung mit weiteren Geräten aufweist, wobei die Datenübertragungsschnittstelle (11) vorzugsweise auch zur Stromübertragung ausgebildet ist.

7. Zwei-Wege-Datenkommunikationssystem nach einem der vorhergehenden Ansprüche,
**dadurch gekennzeichnet, dass**
Möbelmodul (15) und Kabinenmodul (10) Mittel (24) zur drahtlosen, vorzugsweise induktiven Energieübertragung vom Kabinenmodul (10) zum Möbelmodul (15) aufweisen.

8. Zwei-Wege-Datenkommunikationssystem nach einem der vorhergehenden Ansprüche,
**dadurch gekennzeichnet, dass**
die Dichtungsanordnung (16) am Möbelmodul (15) eine umlaufende Gummilippe ist.

9. Zwei-Wege-Datenkommunikationssystem nach einem der vorhergehenden Ansprüche,
**dadurch gekennzeichnet, dass**
wenigstens ein Abdeckelement zum Abdecken wenigstens einer nicht zur Kommunikation mit einem Möbelmodul (15) genutzter Sende- und Empfangseinheiten (20) am Kabinenmodul (10) vorgesehen ist.

10. Zwei-Wege-Datenkommunikationssystem nach einem der vorhergehenden Ansprüche,
**dadurch gekennzeichnet, dass**
wenigstens eine Lichtquelle (21) eine LED oder eine OLED ist und/oder wenigstens ein Lichtsensor (22) eine Fotodiode ist, wobei die Lichtquelle (21) und/oder der Lichtsensor (22) vorzugsweise einen Lichtleiter umfasst, mit dem der Ort der Lichterzeugung von dem Ort des Lichtaustritts und/oder der Ort der Lichterfassung von dem Ort des Lichteintritts räumlich voneinander trennbar ist.

11. Zwei-Wege-Datenkommunikationssystem nach einem der vorhergehenden Ansprüche,
**dadurch gekennzeichnet, dass**
das Kabinenmodul (10) und/oder das Möbel (2) am Boden der Flugzeugkabine befestigt sind.

12. Verfahren zur Initialisierung eines Zwei-Wege-Datenkommunikationssystem nach einem der vorhergehenden Ansprüche, bei dem das Möbelmodul (15) eine Dichtungsanordnung (16) zur Bildung eines geschlossenen Raums um die miteinander kommunizierenden Sende- und Empfangseinheiten (20) des Kabinen- und Möbelmoduls (10, 15) aufweist, mit den Schritten:
- Herstellen des durch die Dichtungsanordnung (16) gebildeten geschlossenen Raums zwischen den Sende- und Empfangseinheiten (20) des Kabinen- und des Möbelmoduls;
- Senden einer Initialisierungsanfrage durch sämtliche Sende- und Empfangseinheiten (20) aller Kabinenmodule (10, 10');
- Senden einer Initialisierungsantwort durch die Sende- und Empfangseinheiten (20) derjenigen Möbelmodule (15), die eine Initialisierungsanfrage erhalten haben; und
- Erstellen oder Überprüfen der Möbelkonfiguration in der Flugzeugkabine anhand der Erfassung derjenigen Kabinenmodule, die eine Initialisierungsantwort von einem Möbelmodul erhalten.

13. Verfahren nach Anspruch 12,
**dadurch gekennzeichnet, dass**
Diejenigen Sende- und Empfangseinheiten (20) der Kabinenmodule (10, 10'), die keine Initialisierungsantwort erhalten haben, ausgeschaltet werden.

14. Verfahren nach Anspruch 12 oder 13,
**dadurch gekennzeichnet, dass**
die Initialisierung einen Bandbreitentest umfasst.

## Claims

1. Two-way data communication system (1) for aircraft cabins comprising at least one cabin module (10, 10'), which is disposed in the aircraft cabin and has at least one transmission and reception unit (20), and a furniture module (15), which is fastened in a furniture item (2) anchored in the aircraft cabin and has a transmission and reception unit (20), wherein the transmission and reception units (20) each comprise a controllable light source (21) and a light sensor (22) and the furniture module is disposed directly vis-à-vis the cabin module (10, 10') such that light emanating from the light source (21) of one of the transmission and reception units (20) of the at least one cabin module (10, 10') is detected by the light sensor (22) of the transmission and reception unit (20) of the furniture module (15) and light emanating from the light source (21) of the transmission and reception unit (20) of the furniture module (15) is detected by the light sensor (22) of the same transmission and reception unit (20) of the at least one cabin module (10, 10'), **characterized in that** a sealing arrangement (16) is provided on the furniture module (15) for forming a closed space about the intercommunicating transmission and reception units (20) on the furniture module (15) and the cabin module (10).

2. Two-way data communication system according to Claim 1, **characterized in that**
the cabin module (10, 10') is made oblong and comprises a plurality of transmission and reception units (20) disposed lengthwise, preferably at equal intervals, wherein the longitudinal axis of the cabin module (10, 10') is preferably oriented parallel to a fastening rail (3) disposed on the floor of the aircraft cabin and/or the distance between the transmission and reception units (20) of the cabin module (10, 10') corresponds to the structural pattern of the fastening rail (3).

3. Two-way data communication system according to either of the preceding claims,
**characterized in that**
at least two cabin modules (10, 10') are provided, wherein the cabin modules (10, 10') are preferably disposed parallel to a fastening rail (3) disposed on the floor of the aircraft cabin.

4. Two-way data communication system according to any of the preceding claims,
**characterized in that**
the cabin module (10) comprises at least one coupling device for exchanging data with a further cabin module (10'), wherein a coupling device is preferably disposed on an end face of the cabin module (10, 10').

5. Two-way data communication system according to Claim 4,
**characterized in that**
the coupling device comprises a transmission and reception unit (20) with a controllable light source (21) and a light sensor (22).

6. Two-way data communication system according to any of the preceding claims,
**characterized in that**
the furniture module (15) and/or at least one cabin module (10, 10') comprise(s) a standardized data transmission interface (11) for connection to further devices, wherein the data transmission interface (11) is preferably also embodied for power transmission.

7. Two-way data communication system according to any of the preceding claims,
**characterized in that**
the furniture module (15) and cabin module (10) comprise means (24) for wireless, preferably inductive power transmission from the cabin module (10) to the furniture module (15).

8. Two-way data communication system according to any of the preceding claims,
**characterized in that**
the sealing arrangement (16) on the furniture module (15) is a peripheral rubber lip.

9. Two-way data communication system according to any of the preceding claims,
**characterized in that**
at least one cover element is provided for covering at least one transmission and reception unit (20) on the cabin module (10) that is not used for communications with a furniture module (15).

10. Two-way data communication system according to any of the preceding claims,
**characterized in that**
at least one light source (21) is a LED or an OLED and/or at least one light sensor (22) is a photodiode, wherein the light source (21) and/or the light sensor (22) preferably comprise(s) an optical conductor, with which the location of the light generation can be spatially isolated from the location of the light outlet and/or the location of the light detection can be spatially isolated from the location of the light entry.

11. Two-way data communication system according to any of the preceding claims,
**characterized in that**
the cabin module (10) and/or the furniture item (2) are fastened to the floor of the aircraft cabin.

12. Method for the initialization of a two-way data communication system according to any of the preceding claims, wherein the furniture module (15) comprises a sealing arrangement (16) for forming a closed space about the intercommunicating transmission and reception units (20) of the cabin module (10) and the furniture module (15), with the steps:
- establishing the closed space formed by the sealing arrangement (16) between the transmission and reception units (20) of the cabin module and the furniture module;
- sending an initialization request by all transmission and reception units (20) of all cabin modules (10, 10');
- sending an initialization response by the transmission and reception units (20) of those furniture modules (15) having received an initialization request; and
- creating or checking the furniture configuration in the aircraft cabin using the detection of those cabin modules that have received an initialization response from a furniture module.

13. Method according to Claim 12,
**characterized in that**
the transmission and reception units (20) of the cabin modules (10, 10') that have not received an initialization response are switched off.

14. Method according to Claim 12 or 13,
**characterized in that**
the initialization includes a bandwidth test.

## Revendications

1. Système de communication bidirectionnelle de données (1) pour cabines d'aéronef, comprenant au moins un module de cabine (10, 10') disposé dans la cabine d'aéronef pourvu d'au moins une unité d'émission et de réception (20) ainsi qu'un module de meuble (15), pourvu d'une unité d'émission et de réception (20), fixé à un meuble (2) ancré dans la cabine d'aéronef, les unités d'émission et de réception (20) comprenant respectivement une source de lumière (21) commandable et un capteur de lumière (22) et le module de meuble étant disposé directement en face du module de cabine (10, 10') de telle sorte que la lumière émise par la source de lumière (21) de l'une des unités d'émission et de réception (20) de l'au moins un module de cabine (10, 10') est détectée par le capteur de lumière (22) de l'unité d'émission et de réception (20) du module de meuble (15) et la lumière émise par la source de lumière (21) de l'unité d'émission et de réception (20) du module de meuble (15) par le capteur de lumière (22) de la même unité d'émission et de réception (20) de l'au moins un module de cabine (10, 10'), **caractérisé en ce qu'**un arrangement d'étanchéité (16) est prévu sur le module de meuble (15) pour former un espace fermé autour des unités d'émission et de réception (20) communiquant entre elles sur le module de meuble et de cabine (10, 15).

2. Système de communication bidirectionnelle de données selon la revendication 1, **caractérisé en ce que** le module de cabine (10, 10') est réalisé allongé et comprend plusieurs unités d'émission et de réception (20) disposées dans le sens de la longueur, de préférence à intervalles réguliers, l'axe longitudinal du module de cabine (10, 10') étant de préférence parallèle à un rail de fixation (3) disposé au sol de la cabine d'aéronef et/ou la distance entre les unités d'émission et de réception (20) du module de cabine (10, 10') correspondant au pas du rail de fixation (3).

3. Système de communication bidirectionnelle de données selon l'une des revendications précédentes,
**caractérisé en ce que**
au moins deux modules de cabine (10, 10') sont prévus, les modules de cabine (10, 10') étant de préférence disposés parallèlement à un rail de fixation (3) disposé au sol de la cabine d'aéronef.

4. Système de communication bidirectionnelle de données selon l'une des revendications précédentes,
**caractérisé en ce que**
le module de cabine (10) possède au moins un dispositif de couplage destiné à l'échange de données avec un module de cabine supplémentaire (10'), un dispositif de couplage étant de préférence disposé sur un côté frontal du module de cabine (10, 10').

5. Système de communication bidirectionnelle de données selon la revendication 4,
**caractérisé en ce que**
le dispositif de couplage comprend une unité d'émission et de réception (20) pourvue d'une source de lumière (21) commandable et d'un capteur de lumière (22).

6. Système de communication bidirectionnelle de données selon l'une des revendications précédentes,
**caractérisé en ce que**
le module de meuble (15) et/ou au moins un module de cabine (10, 10') possède une interface de transmission de données (11) normalisée pour la connexion à des appareils supplémentaires, l'interface de transmission de données (11) étant de préférence également configurée pour la transmission de courant.

7. Système de communication bidirectionnelle de données selon l'une des revendications précédentes,
**caractérisé en ce que**
Module de meuble (15) et module de cabine (10) comportant des moyens (24) pour la transmission d'énergie sans fil, de préférence inductive, du module de cabine (10) au module de meuble (15).

8. Système de communication bidirectionnelle de données selon l'une des revendications précédentes,
**caractérisé en ce que**
l'arrangement d'étanchéité (16) sur le module de meuble (15) est une lèvre en caoutchouc périphérique.

9. Système de communication bidirectionnelle de données selon l'une des revendications précédentes,
**caractérisé en ce que**
au moins un élément de recouvrement est prévu sur le module de cabine (10) pour recouvrir au moins une unité d'émission et de réception (20) non utilisée pour la communication avec un module de meuble (15).

10. Système de communication bidirectionnelle de données selon l'une des revendications précédentes, **caractérisé en ce que**
au moins une source de lumière (21) est une LED ou une OLED et/ou au moins un capteur de lumière (22) est une photodiode, la source de lumière (21) et/ou le capteur de lumière (22) comprenant de préférence un guide de lumière, grâce auquel l'emplacement de la génération de lumière peut être séparé spatialement de l'emplacement de la sortie de lumière et/ou l'emplacement de la détection de lumière de l'emplacement de l'entrée de lumière.

11. Système de communication bidirectionnelle de données selon l'une des revendications précédentes,
**caractérisé en ce que**
le module de cabine (10) et/ou le meuble (2) sont fixés au plancher de la cabine d'aéronef.

12. Procédé d'initialisation d'un système de communication bidirectionnelle de données selon l'une des revendications précédentes, avec lequel le module de meuble (15) possède un arrangement d'étanchéité (16) destiné à former un espace fermé autour des unités d'émission et de réception (20) du module de cabine et du module de meuble (10, 15) qui communiquent entre elles, comprenant les étapes suivantes :
- création d'un espace fermé entre les unités d'émission et de réception (20) du module de cabine et du module de meuble par l'arrangement d'étanchéité (16) ;
- émission d'une demande d'initialisation par toutes les unités d'émission et de réception (20) de tous les modules de cabine (10, 10') ;
- émission d'une réponse d'initialisation par les unités d'émission et de réception (20) des modules de meubles (15) qui ont reçu une demande d'initialisation ; et
- création ou vérification de la configuration de meuble dans la cabine d'aéronef à l'aide de la détection des modules de cabine qui reçoivent une réponse d'initialisation d'un module de meuble.

13. Procédé selon la revendication 12,
**caractérisé en ce que**
les unités d'émission et de réception (20) des modules de cabine (10, 10') qui n'ont pas reçu de réponse d'initialisation sont désactivées.

14. Procédé selon la revendication 12 ou 13,
**caractérisé en ce que**
l'initialisation comprend un test de largeur de bande.
